# FASCICULE DE BREVET EUROPEEN

(11) **EP 3 388 578 B1**
(45) Date de publication et mention de la délivrance du brevet: **01.11.2023**
(21) Numéro de dépôt: 18020151.9
(22) Date de dépôt: 13.04.2018
(51) Int. Cl.: E01C 11/22, C04B 28/04

(54) **COMPOSITION SÈCHE POUR LA PRÉPARATION DE BÉTON DRAINANT, PROCÉDÉ DE PRÉPARATION DE BÉTON AVEC LA DITE COMPOSITION ET BÉTON DRAINANT OBTENU AVEC LE PROCÉDÉ**
TROCKENE ZUSAMMENSETZUNG FÜR DIE HERSTELLUNG VON DRAIN-BETON, HERSTELLUNGSVERFAHREN VON BETON AUS DIESER ZUSAMMENSETZUNG UND MIT DIESEM VERFAHREN ERHALTENER DRAIN-BETON
DRY COMPOSITION FOR PREPARING DRAINING CONCRETE, METHOD FOR PREPARING CONCRETE WITH SAID COMPOSITION AND DRAINING CONCRETE OBTAINED WITH THE METHOD

(30) Priorité: 14.04.2017 FR 1770385
(43) Date de publication de la demande: 17.10.2018
(73) Titulaire: DRAINCOLOR, 11370 Leucate (FR)
(72) Inventeur: Oliveira-Fernendez, Alain, 31150 Gratentour (FR); Oliveira-Fernendez, Catherine, 31150 Gratentour (FR)
(74) Mandataire: Weber, Jean-François

(56) Documents cités:
- WO-A1-03/089384
- FR-A1- 2 995 303
- DATABASE WPI Week 200367 Thomson Scientific, London, GB; AN 2003-701308 XP002775326, & JP 2003 160370 A (TAIHEIYO CEMENT CORP) 3 juin 2003 (2003-06-03)
- DATABASE WPI Week 200934 Thomson Scientific, London, GB; AN 2009-H64642 XP002775327, & CN 101 407 390 A (UNIV ZHEJIANG NINGBO TECHNOLOGY INST) 15 avril 2009 (2009-04-15)

## Description

La présente invention concerne une amélioration apportée aux compositions sèches pour la préparation de béton drainant. Elle concerne en particulier une composition sèche qui additionnée à une quantité d'eau précise donnera, un béton, qui une fois durci, sera drainant c-à-d présentant une porosité suffisante supérieure à 15 % pour permettre l'écoulement, essentiellement verticalement, de l'eau à son travers. L'invention concerne également un procédé de préparation de béton drainant à partir de la dite composition sèche, ainsi que le béton obtenu par le procédé.

Les bétons drainants sont couramment utilisés pour la fabrication de dalles de sol d'extérieur, par exemple pour les chemins et terrasses des particuliers, les parkings, et plus généralement les zones à faible trafic routier. Le béton drainant est généralement coloré, afin d'améliorer son aspect esthétique. Le béton drainant connu est principalement formé à partir d'eau, de granulats, généralement de type sable et/ou gravillons, d'un liant hydraulique, généralement de type ciment, et le cas échéant de divers additifs. De manière classique, une dalle de béton drainant est réalisée par étalement du béton sous forme humide sur la zone de sol à recouvrir, puis compactage, par application d'une pression d'intensité adéquate sur la surface supérieure de la dalle, en direction du sol. La technologie des bétons drainants est utilisée notamment dans les cas où la surface doit rapidement évacuer l'eau qu'elle reçoit. Comparés aux sols extérieurs en béton traditionnel, les sols extérieurs réalisés en béton drainant, limitent les risques d'inondation due au ruissellement lors de fortes précipitations.

Le brevet français FR2995304 décrit une composition sèche pour la préparation de béton drainant, sous forme d'un mélange conditionné en sac. Ce mélange contient notamment les composants à l'état solide suivants : 65 à 90 % de liant hydraulique ; 0,1 à 25 % de granulats ; 0,05 à 3 % d'agent plastifiant ; 0,1 à 20 % de matériau à réactivité pouzzolanique. Cette composition sèche n'est pas prête à l'emploi dans la mesure où l'utilisateur, par exemple un artisan ou un professionnel sur un chantier, qui prépare le béton drainant, doit y ajouter des granulats de type gravillons dans une bétonnière prévue pour cela, avec le risque d'affecter la qualité des produits finis (terrasses, parking,....). En effet, l'utilisateur ne dispose pas forcément localement de granulats adéquats . Les produits finis présenteront alors des défauts comme une porosité et des performances mécaniques amoindries. Par ailleurs, cette composition de l'art antérieur qui nécessite de rajouter des granulats impose la production d'une quantité minimale de 88 litres de béton drainant dans une bétonnière adaptée, alors que les utilisateurs ont souvent besoin d'une quantité plus petite.

La demande de brevet EP2418187 décrit une composition sèche conditionnée en sacs de 25 kg, prête à l'emploi après rajout de la quantité d'eau adéquate et malaxage. Ce mélange sec comprend les constituants suivants : 20-70 % d'agrégats, 20-75 % de liant hydraulique, 0,6-3 % de super plastifiant, 2-10 % de pouzzolane (micro silice), 0,08-0,15 % de fibres synthétiques. Ce mélange est approprié pour la fabrication de béton cellulaire mais pas pour la fabrication de béton drainant.

La présente invention vise à remédier aux inconvénients précités. Elle vise en particulier à proposer une nouvelle composition sèche pour béton drainant plus simple à utiliser sur le terrain par les constructeurs, et qui présente des propriétés mécaniques et drainante améliorées.

Selon l'invention, la composition sèche pour la préparation de béton drainant comprend au moins les composants à l'état solide suivants :
- 12 de liant hydraulique du type ciment,
- 83 % de granulats de granulométrie comprise entre 0,01 mm et 8 mm comprenant essentiellement 3% de sable de granulométrie inférieure ou égale à 4 mm et 80% de gravillons concassés lavés de granulométrie comprise entre 2 mm et 8 mm,
- 3,92 % de silicate d'alumine déshydroxylé de composition générale Al2O3, 2SiO2,
- 0,2 % de fibres synthétiques.

Tous les pourcentages précités sont des pourcentages en poids par rapport au poids total de la composition sèche.

Pour la fabrication de cette nouvelle composition « prête à l'emploi », un agent entraîneur d'air est ajouté à la préparation avant malaxage. Le mélange ou malaxage est réalisé en usine, et la préparation obtenue est conditionnée en sac de 15 à 25 Kg, de préférence en sac d'un volume de 13 litres (0,013 mètre-cube).

Cet agent qui génère un réseau de microbulles particulièrement stable apporte au béton drainant une action efficace contre les cycles de gel et dégel et agit sur les sels de déverglace.

Cette solution est une réponse apportée notamment pour la mise en oeuvre du béton drainant dans les zones humides et les terrains en altitude.

Quand le béton drainant atteint l'état frais après incorporation de l'eau dans la bétonnière, l'entraineur d'air apporte une flexibilité au béton qui permet de réduire l'eau présent dans la préparation et limite les effets de ségrégation.

Le béton drainant ainsi obtenu est plus aéré, plus résistant, plus résilient et plus facile à mettre en oeuvre.

Cette composition sèche peut être entièrement fabriquée et conditionnée en usine, stockée, puis livrée sur un chantier, pour y être mélangée à la quantité d'eau utile et/ou à une dose de colorant prédosée. Elle peut notamment être conditionnée en sacs de 15 kg, de 20 kg ou de 25 kg, qui sont facilement transportables, y compris dans les sites difficiles d'accès. Elle est en outre particulièrement facile et confortable à utiliser pour la personne réalisant le chantier, puisqu'elle ne nécessite aucun dosage individuel des matériaux qui composent le béton drainant sur le lieu du chantier. Il suffit pour la mettre en oeuvre, de gâcher le contenu d'un ou plusieurs sacs avec la quantité d'eau utile, et/ou une dose de colorant, pour obtenir rapidement un béton drainant humide prêt à l'emploi.

La présente invention s'exprime également dans les termes d'un produit pour la préparation de béton drainant, comportant un sac étanche et une composition sèche contenue dans ce sac, cette composition se présentant sous forme d'un mélange d'au moins les composants à l'état solide suivants : un liant hydraulique, des granulats concassés et lavés, un agent entraîneur d'air, un silicate d'alumine et des fibres. Par l'expression « liant hydraulique », on entend dans la présente description un matériau pulvérulent qui, lorsqu'il est mélangé à l'eau, forme une pâte qui durcit sous l'effet de réactions d'hydratation et qui reste ensuite stable et résistante, y compris lorsqu'elle est mouillée à nouveau. Le liant hydraulique mis en oeuvre selon la présente invention est du type ciment. Il peut s'agir d'un ciment de type CEM I, CEM II, CEM III, CEM IV ou CEM V, conforme à la norme concernant les ciments NF EN 197-1.

Les granulats comprennent essentiellement du sable et des gravillons qui doivent être impérativement concassés et lavés. Ces granulats sont de type silice, ou alluvionnaire calcaire, ou autre. Le diamètre des granulats est compris entre 0,01 mm et 8 mm. Les grains de sable présentent un diamètre inférieure ou égale à 4 mm, et les gravillons présentent un diamètre de préférence compris entre 2 mm et 8 mm.

La composition peut également comporter d'autres adjuvants, tels qu'un agent de protection de surface.

La présente invention concerne également un procédé de préparation de béton drainant, qui comprend une étape de gâchage de la composition sèche de l'invention avec de l'eau. L'étape de gâchage peut être précédée d'une étape d'addition de colorant.

L'invention concerne également le béton drainant obtenu par le procédé de préparation selon l'invention.

Une dalle de béton formée au moyen d'un tel béton drainant peut être obtenue par étalement et mise en forme du béton drainant humide sur une surface de sol, par exemple au moyen d'un râteau à dents, nivelage, et compactage du béton par une pression d'intensité adéquate exercée sur la surface supérieure de la dalle. La dalle de béton drainant ainsi obtenue présente avantageusement des propriétés, notamment en termes de résistance mécanique, durabilité et capacité de drainage, qui sont équivalentes à celles des dalles de béton drainant obtenues par les procédés de l'art antérieur.

### EXEMPLE 1

### 1.A/ Composition sèche

Une composition pour béton drainant selon un mode de réalisation particulier de l'invention est fabriquée de la façon suivante. Du sable de classe granulaire 0/4, formé de granulats de diamètre 5 inférieur ou égal à 4 mm, et du concassé lavé 2/4 ou 2/6, formé de granulats de diamètre compris entre 2 et 6 mm, sont soumis en usine à une étape de séchage dans un tambour sécheur tournant. Pour obtenir une composition sèche conforme à l'invention, on mélange, dans une bétonnière ou un malaxeur, les composants, dans les proportions massiques, exprimées en % en poids, par rapport au poids total de la composition, qui sont indiqués dans le Tableau 1 ci-après.

**Tableau 1 : Composants entrant dans la constitution d'une composition sèche selon un mode de réalisation de l'invention.**

| Composant | % en poids/poids total |
|---|---|
| Ciment CEM III/A 52,5 L CE PM-ES CP1 NF | 12 |
| Sable 0/4 | 3 |
| Concassé 2/4 ou 2/6 | 80 |
| Entraîneur d'air | 0,2 |
| ARGICEM | 3,92 |
| Fibres Syntec 12 | 0,08 |

La composition sèche ainsi obtenue est conditionnée en sacs de 15, 20, 25 ou 30 kg. Elle peut être stockée pendant plusieurs mois sans dégradation. Elle est aisément transportable ainsi conditionnée.

### 1.B/ Mise en oeuvre de la composition :

Un béton drainant est préparé à partir de la composition sèche ci- dessus, en mélangeant, dans une bétonnière ou un malaxeur classique en lui-même, le contenu de 6 sacs de 20 ou 25 kg de composition, avec le contenu d'un sachet d'environ 0,5 kg d'oxyde de fer en poudre, et avec 10 litres d'eau, jusqu'à l'obtention d'une pâte sensiblement homogène. Le temps de malaxage nécessaire à cet effet est d'environ 5 minutes. Cette opération ne nécessite aucun dosage de composant autre que l'eau et la dose de colorant prédosée, si bien qu'elle est facile, rapide et confortable à réaliser. Le béton humide ainsi préparé est étalé et mis en forme sur la surface de sol souhaitée, au moyen par exemple d'un râteau à dents. Il est ensuite nivelé, par exemple au moyen d'un râteau plat ou d'une règle, et enfin serré par pression exercée sur sa surface supérieure. Des opérations de finition sont ensuite mises en oeuvre si nécessaire. On obtient, après durcissement du béton, une dalle de béton drainant coloré, de taux de porosité d'environ 20 %, qui présente d'excellentes propriétés de résistance mécanique, de durabilité et de capacité de drainage, en même temps qu'un bel aspect esthétique.

La description ci-avant illustre clairement que par ses différentes caractéristiques et leurs avantages, la présente invention atteint les objectifs qu'elle s'était fixés. En particulier, elle fournit une composition sèche pour la préparation de béton drainant, conditionnable en sacs étanches stockables et facilement transportables sur tout lieu de chantier. Cette composition permet de préparer facilement et rapidement du béton drainant humide, par simple gâchage avec de l'eau et le cas échéant des gravillons et/ou une dose de colorant.

## Revendications

1. Composition sèche pour la préparation de béton drainant **caractérisée en ce qu'**elle comprend au moins les composants à l'état solide suivants :
- 12 % de liant hydraulique, du type ciment.
- 83 % de granulats comprenant essentiellement 3 % de sable de granulométrie inférieure ou égale à 4 mm et 80 % de gravillons concassés lavés de granulométrie comprise entre 2 mm et 6 mm,
- 3,92 % de silicate d'alumine déshydroxylé de composition générale Al2O3, 2SiO2,
- 0,08 % de fibres synthétiques.
- 0,2 % d'entraîneur d'air.
Tous les pourcentages précités sont des pourcentages en poids par rapport au poids total de la composition sèche.

2. Composition selon la revendication 1 **caractérisée en ce que** l'agent entraîneur d'air est introduit dans la composition de la revendication 1 avant malaxage réalisé en usine.

3. Composition sèche selon la revendication 1 ou 2 **caractérisée en ce qu'**elle est conditionnée en sacs étanches stockables et facilement transportables sur tout lieu de chantier.

4. Procédé de préparation de béton drainant au moyen d'une composition selon l'une quelconque des revendications 1 à 3 **caractérisée en ce qu'**il comprend une étape de gâchage

5. Procédé selon la revendication 4, **caractérisé en ce qu'**avant l'étape de gâchage, un colorant est mélangé à la composition.

6. Béton drainant obtenu par le procédé selon la revendication 4 ou 5.

## Patentansprüche

1. Trockene Zusammensetzung für die Herstellung von Drain-Beton, **dadurch gekennzeichnet, dass** sie mindestens die folgenden Komponenten in festem Zustand aufweist:
- 12 % hydraulisches Bindemittel vom Typ Zement.
- 83 % Zuschlagstoffe, die im Wesentlichen 3 % Sand mit einer Korngröße von 4 mm oder weniger und 80 % gewaschenen gebrochenen Kies mit einer Korngröße zwischen 2 mm und 6 mm umfassen,
- 3,92 % dehydroxyliertes Aluminiumsilikat der allgemeinen Zusammensetzung Al2O3, 2SiO2,
- 0,08 % synthetische Fasern.
- 0,2 % Luftporenbildner.
wobei alle vorgenannten Prozentangaben Gewichtsprozente bezogen auf das Gesamtgewicht der trockenen Zusammensetzung sind.

2. Zusammensetzung nach Anspruch 1, **dadurch gekennzeichnet, dass** das Luftporenbildnermittel vor dem in der Produktionsstätte durchgeführten Mischen in die Zusammensetzung nach Anspruch 1 eingebracht ist.

3. Trockene Zusammensetzung nach Anspruch 1 oder 2, **dadurch gekennzeichnet, dass** sie in dichten, lagerfähigen Säcken verpackt ist, die leicht zu jedem Ort auf der Baustelle transportiert werden können.

4. Verfahren zur Herstellung von Drain-Beton mittels einer Zusammensetzung nach einem der Ansprüche 1 bis 3, **dadurch gekennzeichnet, dass** es einen Schritt des Anmachens umfasst

5. Verfahren nach Anspruch 4, **dadurch gekennzeichnet, dass** vor dem Schritt des Anmachens ein Farbstoff in die Zusammensetzung eingemischt wird.

6. Drain-Beton, der durch das Verfahren nach Anspruch 4 oder 5 hergestellt ist.

## Claims

1. A dry composition for the preparation of pervious concrete **characterized in that** it comprises at least the following solid state components:
- 12% of hydraulic binder, of the cement type.
- 83% of aggregates comprising essentially 3% of sand with a grain size of less than or equal to 4 mm and 80% of washed crushed gravel with a grain size comprised between 2 mm and 6 mm,
- 3.92% of dehydroxylated alumina silicate of general composition Al2O3, 2SiO2,
- 0.08% of synthetic fibers.
- 0.2% of air entrainer.
All the aforementioned percentages are percentages by weight relative to the total weight of the dry composition.

2. The composition according to claim 1, **characterized in that** the air-entraining agent is introduced into the composition of claim 1 before mixing carried out in the factory.

3. The dry composition according to claim 1 or 2 **characterized in that** it is packaged in sealed bags that can be stored and easily transported to any site of construction.

4. A method for preparing pervious concrete by means of a composition according to any one of claims 1 to 3, **characterized in that** it comprises a mixing step

5. The method according to claim 4, **characterized in that**, before the mixing step, a dye is mixed with the composition.

6. A pervious concrete obtained by the method according to claim 4 or 5.
